# EUROPEAN PATENT SPECIFICATION

(11) **EP 3 598 087 B1**
(45) Date of publication and mention of the grant of the patent: **24.04.2024**
(21) Application number: 17900796.8
(22) Date of filing: 16.11.2017
(51) Int. Cl.: G01H 1/00

(54) **STATE MONITORING SYSTEM FOR ROTATING MACHINE, METHOD OF MONITORING STATE OF ROTATING MACHINE, PROGRAM, AND RECORDING MEDIUM**
ZUSTANDSÜBERWACHUNGSSYSTEM FÜR DREHMASCHINE, ZUSTANDSÜBERWACHUNGSVERFAHREN FÜR DREHMASCHINE, PROGRAMM UND AUFZEICHNUNGSMEDIUM
SYSTÈME DE SURVEILLANCE D'ÉTAT POUR MACHINE ROTATIVE, PROCÉDÉ DE SURVEILLANCE D'ÉTAT POUR MACHINE ROTATIVE, PROGRAMME ET SUPPORT D'ENREGISTREMENT

(30) Priority: 13.03.2017 JP 2017047083
(43) Date of publication of application: 22.01.2020
(73) Proprietor: Omron Corporation, Kyoto-shi, Kyoto 600-8530 (JP)
(72) Inventor: YOKOTA, Koji, Kyoto-shi, Kyoto 600-8530 (JP); YAMAMOTO, Yukiyoshi, Kyoto-shi, Kyoto 600-8530 (JP); YASUDA, Taihei, Aso-shi, Kumamoto 869-2696 (JP); OGAWA, Tadahiko, Kyoto-shi, Kyoto 600-8530 (JP); NAKAMURA, Takahiro, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2017/041273
(87) International publication number: WO 2018/168073

(56) References cited:
- WO-A1-2015/198793
- JP-A- H07 243 682
- JP-A- H08 289 376
- JP-A- H10 227 700
- JP-A- S63 145 923
- JP-A- 2003 235 289
- JP-A- 2009 229 090
- JP-A- 2017 166 960
- US-A- 5 726 911
- US-A1- 2015 310 723
- US-B1- 6 694 285

## Description

### TECHNICAL FIELD

The present invention relates to a state monitoring system for a rotating machine, a method of monitoring the state of the rotating machine, a program for causing a computer to execute the method, and a recording medium in which the program is recorded.

### BACKGROUND ART

The technique for diagnosing abnormalities in a rotating machine is known. For example, Japanese Patent Laying-Open No. 2007-10415 (PTL 1) discloses an apparatus and a method for diagnosing an abnormality in a bearing portion of a rotating machine. An abnormality diagnosing apparatus is configured to measure vibrations occurring in the bearing portion of the rotating machine to compare a representative value calculated from the measured vibration data with a diagnostic threshold value registered in advance, thereby determining whether an abnormality occurs or not in the bearing portion.
US 6,694,285 B1 discloses a monitoring method and device which is capable of determining the overall fitness or condition of the device being monitored while simultaneously detecting unknown or unrecognized vibration frequencies. In addition, it is disclosed that setting threshold values corresponding to the environment surrounding the device reduces the incidence of false alarms.
US 5,726,911 discloses an ac machine monitor, particularly applicable to ac induction motors, that provides information for ascertaining the health and condition of the motor. The monitor is self-contained, having its own internal power source, electronics, and sensor suite, and attaches directly to the outer frame of the motor. Sensors disposed within the monitor include a motor frame temperature sensor, flux sensor, vibration sensor, and clock. An ambient temperature sensor enables determination of motor frame temperature relative to ambient. Sensor outputs are processed and analyzed by monitor electronics to determine various life history parameters, including motor speed and load, which are stored in electronic memory. A communications port enables a peripheral device, such as a notebook computer or portable data collector, to communicate with the monitor and download the life history parameters stored in memory.
JP 2003 235289 A discloses a motor monitoring system comprising a motor section having the motor, the auxiliary coil, and the thermostat, a power supply for supplying an input power to the motor section, a vibration detecting sensor, an LED display unit for judging an induced voltage value detected from a motor section auxiliary coil, a stator temperature state detected from the thermostat and a rotating direction of the motor and displaying them, and a relay output unit for operating according to a relay contact control signal output from a microprocessor.
US 2016/310723 A1 discloses a system for monitoring and recording health data associated with a machine. The system employs a radio frequency identification (RFID) transponder, which is affixed to the machine. The system utilizes a digital memory component of the RFID transponder to record and maintain historical measurements to aid in determining machine condition trending.

### CITATION LIST

### PATENT LITERATURE

PTL 1: Japanese Patent Laying-Open No. 2007-10415

### SUMMARY OF INVENTION

### TECHNICAL PROBLEM

As disclosed in Japanese Patent Laying-Open No. 2007-10415 (PTL 1), only the vibration value is used for determination about an abnormality in the rotating machine. However, the determination based only on the vibration value causes a problem that the reliability of the determination result is relatively low.

An object of the present invention is to provide a technique regarding monitoring of the state of a rotating machine for highly reliably determining occurrence of an abnormality in a rotating machine.

### SOLUTION TO PROBLEM

A state monitoring system for a rotating machine according to an aspect of the present invention comprises the features of claim 1.

Preferably, the second temperature sensor is incorporated in the preamplifier. The preamplifier is configured to amplify an analog signal output from each of the acceleration sensor, the first temperature sensor and the second temperature sensor, and convert the amplified analog signal into a digital signal.

Preferably, the second temperature sensor is incorporated in the main unit.

The preamplifier is configured to amplify an analog signal output from each of the acceleration sensor and the first temperature sensor, and convert the amplified analog signal into a digital signal. The main unit is configured to amplify an analog signal output from the second temperature sensor and convert the amplified analog signal into a digital signal.

Preferably, the state monitoring system for a rotating machine further includes: a cable through which an analog signal output from the sensor head is transmitted to the preamplifier; and a connector through which the sensor head is connectable to the cable and through which the sensor head is removable from the cable.

A method of monitoring a state of a rotating machine according to an aspect of the present invention comprises the features of claim 5.

A program according to an aspect of the present invention comprises the features of claim 6.

A recording medium according to an aspect of the present invention is a non-transitory computer-readable recording medium in which the above-mentioned program is recorded.

### ADVANTAGEOUS EFFECTS OF INVENTION

According to the present invention, the temperature of the rotating machine itself and the ambient temperature of the rotating machine can be simultaneously measured in addition to the vibration value of the rotating machine. When it is determined based on the vibration value whether an abnormality occurs or not in the rotating machine, the temperature of the rotating machine and the ambient temperature of the rotating machine can be taken into consideration. Accordingly, the reliability of determination about an abnormality in the rotating machine can be improved.

### BRIEF DESCRIPTION OF DRAWINGS

Fig. 1 is a schematic diagram of the configuration of a state monitoring system for a rotating machine according to one embodiment of the present invention.
Fig. 2 is a diagram showing an example of a sensor head shown in Fig. 1.
Fig. 3 is a block diagram of the state monitoring system shown in Fig. 1.
Fig. 4 is a diagram illustrating the first mode of two modes for state monitoring.
Fig. 5 is a diagram illustrating the second mode of two modes for state monitoring.
Fig. 6 is a graph showing a change in vibration value with respect to the operating times of two motors.
Fig. 7 is a diagram showing the first example of a surface temperature (motor temperature) and an ambient temperature of each of two motors in tabular form.
Fig. 8 is a diagram showing the second example of a surface temperature (motor temperature) and an ambient temperature of each of two motors in tabular form.
Fig. 9 is a diagram showing an example of tendencies of the vibration value, the motor temperature, and the ambient temperature.
Fig. 10 is a block diagram of the state monitoring system according to an embodiment of the present invention.
Fig. 11 is a flowchart for illustrating a monitoring process and an abnormality determination process that are performed by the state monitoring system.

### DESCRIPTION OF EMBODIMENTS

The embodiments of the present invention will be hereinafter described in detail with reference to the accompanying drawings, in which the same or corresponding components will be designated by the same reference characters, and description thereof will not be repeated.

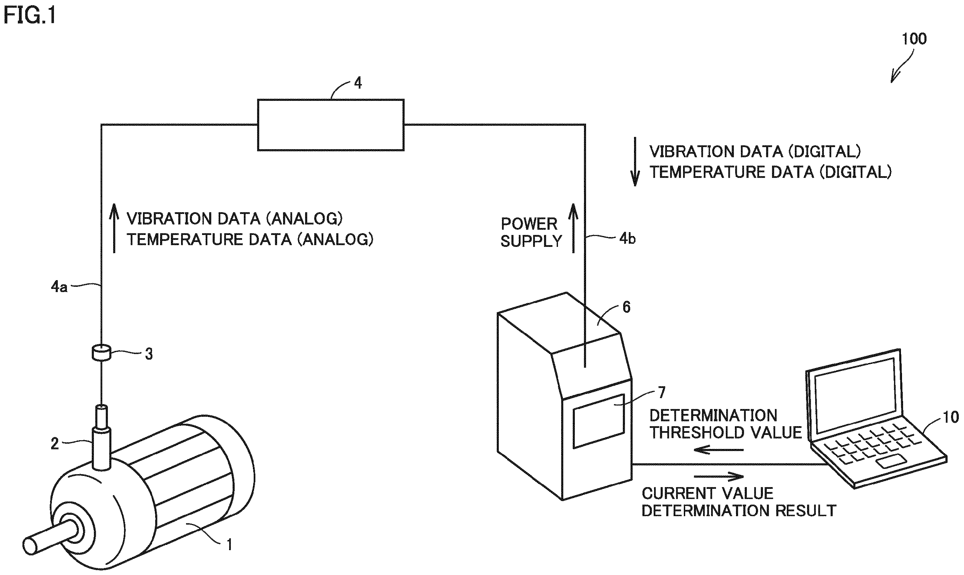

Fig. 1 is a schematic diagram of the configuration of a state monitoring system for a rotating machine according to one embodiment of the present invention. As shown in Fig. 1, a state monitoring system 100 includes a sensor head 2, a preamplifier 4, and a main unit 6. Sensor head 2 is connected to preamplifier 4 through a connector 3 and a cable 4a. Preamplifier 4 is connected to main unit 6 through a cable 4b.

Sensor head 2 is attached to the surface of a motor (rotating machine) 1, and measures the number of vibrations of motor 1 and the surface temperature of motor 1. Sensor head 2 outputs the vibration data showing the number of vibrations of motor 1 and the temperature data showing the surface temperature of motor 1 in the form of an analog signal.

Preamplifier 4 receives a power supply voltage from main unit 6 through cable 4b. Preamplifier 4 receives the vibration data and the temperature data from sensor head 2 and converts the received data into digital data.

Preamplifier 4 further measures the ambient temperature of motor 1. Preamplifier 4 transmits the vibration data showing the number of vibrations of motor 1, the temperature data showing the surface temperature of motor 1, and the temperature data showing the ambient temperature of motor 1 to main unit 6 through cable 4b.

Main unit 6 includes a display unit 7. Display unit 7 displays the data about the number of vibrations of motor 1, the temperature data about the surface temperature of motor 1, and the temperature data about the ambient temperature of motor 1. Furthermore, main unit 6 compares the vibration data with a determination threshold value to determine whether motor 1 normally operates or not. Main unit 6 can cause display unit 7 to display the determination result.

Main unit 6 is connected to a host system 10 and receives the determination threshold value from host system 10. The determination threshold value is input, for example, by a user into host system 10 and transmitted from host system 10 to main unit 6. On the other hand, main unit 6 transmits the current vibration value and the current temperature value to host system 10. Furthermore, main unit 6 transmits the determination result about the state of motor 1 to host system 10.

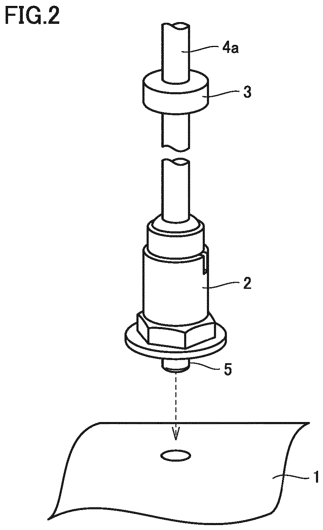

Fig. 2 is a diagram showing an example of the sensor head shown in Fig. 1.

As shown in Fig. 2, sensor head 2 includes a thread portion 5 through which sensor head 2 is attached to the surface of motor 1. As described later, an acceleration sensor and a temperature sensor are incorporated in sensor head 2. Sensor head 2 is attached to the surface of motor 1, so that the acceleration sensor and the temperature sensor come into contact with the surface of motor 1. In consideration of the installation environment of motor 1, sensor head 2 is configured to have a protection structure having dust resistance, waterproofness, and oil resistance.

According to the present embodiment, connector 3 allows sensor head 2 to be connectable to cable 4a and also to be removable from cable 4a. When sensor head 2 is attached to motor 1 or when sensor head 2 is removed form motor 1, sensor head 2 needs to be rotated. In the case where sensor head 2 remains connected to cable 4a, rotation of sensor head 2 may twist cable 4a. By rotating sensor head 2 in the state where sensor head 2 is removed from connector 3, twisting of cable 4a can be prevented. Thus, for example, also when cable 4a is routed through a duct, sensor head 2 can be readily replaced.

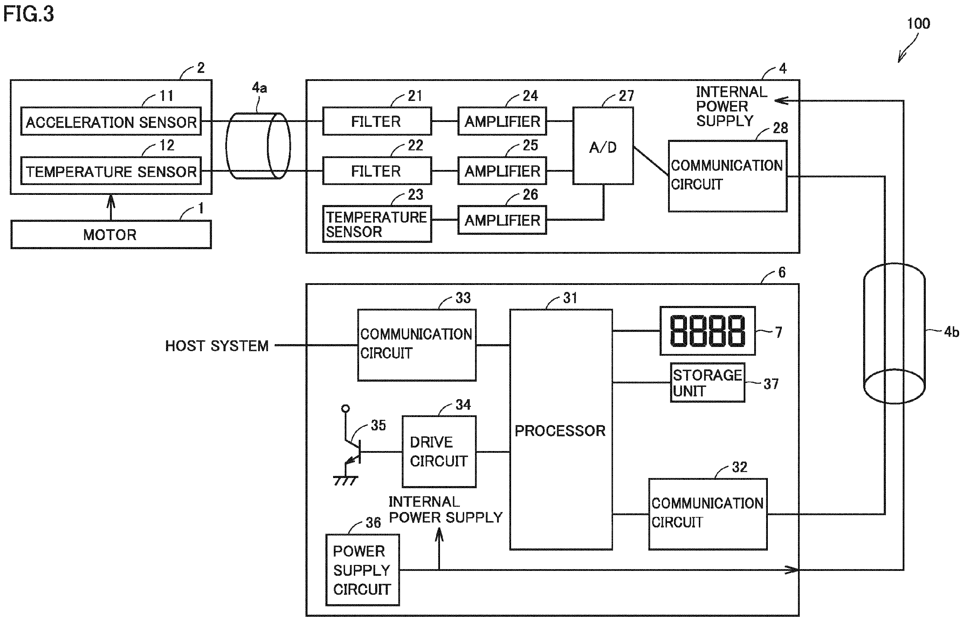

Fig. 3 is a block diagram of a state monitoring system 100 shown in Fig. 1. As shown in Fig. 3, sensor head 2 includes an acceleration sensor 11 and a temperature sensor 12. Acceleration sensor 11 serves to detect vibrations of motor 1. Acceleration sensor 11 can detect the vibration frequency up to 10 kHz, the vibration acceleration in the range of 0.5 G to 10 G, and the vibration velocity in the range of 0.5 m/s to 100 m/s, for example. Temperature sensor 12 serves to detect the surface temperature of motor 1.

Preamplifier 4 includes filters 21, 22, a temperature sensor 23, amplifiers 24, 25, 26, an A/D converter 27, and a communication circuit 28. Filter 21 removes the noise contained in the analog signal (vibration data) transmitted from acceleration sensor 11 through cable 4a. Filter 22 removes the noise contained in the analog signal (temperature data) transmitted from temperature sensor 12 through cable 4a. Amplifiers 24 and 25 amplify the analog signals that have passed through filters 21 and 22, respectively. Thus, it can also be said that preamplifier 4 serves to relay the vibration value from acceleration sensor 11 and the rotating machine surface temperature value from temperature sensor 12.

Temperature sensor 23 detects the ambient temperature of motor 1 and outputs the analog signal representing the detected temperature. Amplifier 26 amplifies the analog signal output from temperature sensor 23.

A/D converter 27 converts the analog signal output from each of amplifiers 24, 25 and 26 into a digital signal. Communication circuit 28 transmits the digital signal output from A/D converter 27 through cable 4b to main unit 6.

Main unit 6 includes display unit 7, a processor 31, communication circuits 32, 33, a drive circuit 34, an output unit 35, a power supply circuit 36, and a storage unit 37. Processor 31 is implemented, for example, by a computing unit (computer) such as a central processing unit (CPU) and configured to read a program from storage unit 37 and execute the program. Communication circuit 32 receives a digital signal (vibration data and temperature data) from preamplifier 4 through cable 4b. Processor 31 causes display unit 7 to display the vibration data and the temperature data. Processor 31 compares the vibration data with a determination threshold value to determine whether an abnormality occurs or not in motor 1. Processor 31 causes display unit 7 to display the determination result and outputs the determination result to a host system through communication circuit 33.

Processor 31 controls drive circuit 34 to drive output unit 35. For example, when it is determined that an abnormality occurs in motor 1, output unit 35 generates an output showing the abnormality.

Power supply circuit 36 supplies an internal power supply for operating main unit 6 to main unit 6 and also supplies an internal power supply for operating preamplifier 4 to preamplifier 4 through cable 4b.

Storage unit 37 serves as a recording medium in which a program for causing processor 31 to operate is stored in a non-volatile manner. The program may be provided from a host system through communication circuit 33 to main unit 6 or may be provided through other recording media (for example, a USB memory and the like) to main unit 6. Furthermore, storage unit 37 may be integrated into processor 31.

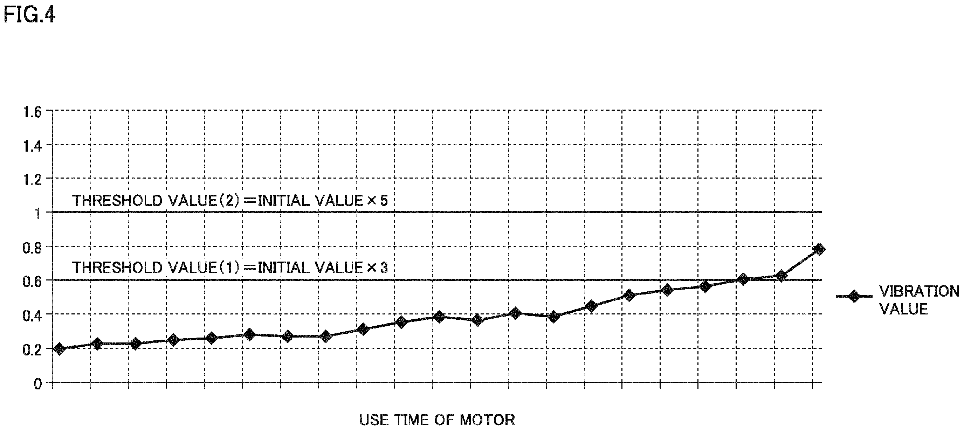

According to the present embodiment, the state monitoring system can have one or both of two modes for state monitoring, which will be described below. Fig. 4 is a diagram illustrating the first mode of these two modes for state monitoring.

As shown in Fig. 4, the tendency of the vibration acceleration is monitored in the first mode. In the first mode, the value (initial value) of the vibration acceleration in a brand-new motor 1 is compared with the current (present) value of the vibration acceleration.

The value of the vibration acceleration increases as the use time of the motor elapses. Two determination threshold values are set for the ratio of the current value to the initial value. In the example shown in Fig. 4, the first threshold value (a threshold value (1)) is set at a value that is three times as high as the initial value while the second threshold value (a threshold value (2)) is set at a value that is five times as high as the initial value. When the current value exceeds the threshold value (1), it is determined that motor 1 is in the state of a caution level. Furthermore, when the current value exceeds the threshold value (2), it is determined that motor 1 is in the state of an abnormal level.

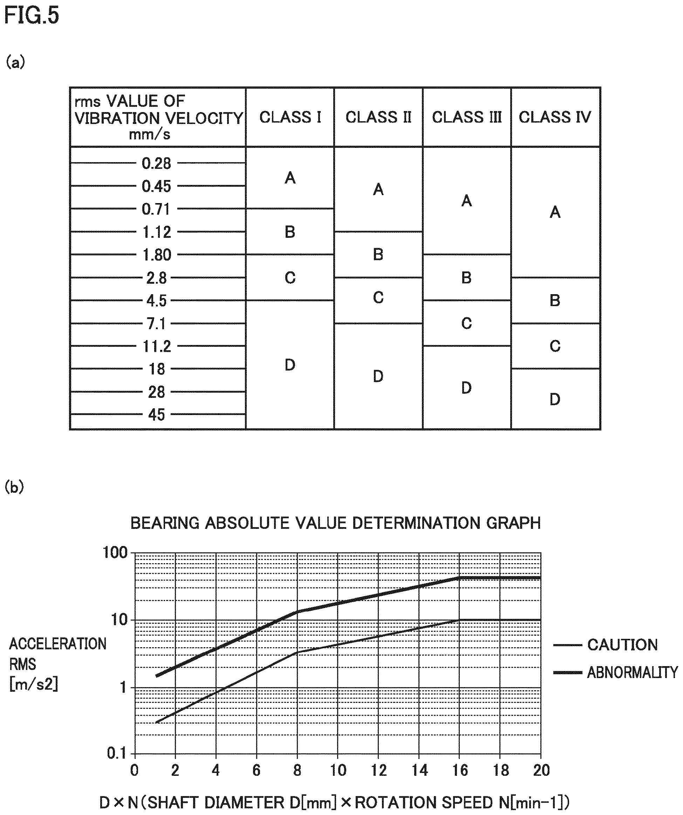

Fig. 5 is a diagram illustrating the second mode of two modes for state monitoring. As shown in Fig. 5, the state of motor 1 is determined by comparing the vibration level value with the standards (for example, ISO standards, JIS standards or the like) or the reference that is independently set. For example, as shown in Fig. 5(a), for determining the state of the portion of motor 1 other than the bearing, it is determined based on the vibration velocity value as to which level of A to D the current level of the motor corresponds. "Class I" to "Class IV" in Fig. 5 (a) represent the classification based on the rating and the like of the motor. For determining the state of the bearing, the vibration acceleration is monitored, for example, as shown in Fig. 5(b). The vibration acceleration relative to the product of the shaft diameter and the rotation speed is determined based on the reference. In this mode, the state of motor 1 can be determined even when the vibration velocity or the vibration acceleration of a brand-new motor 1 is unclear.

In these two modes, the determination threshold value may be a predetermined value. The determination threshold value in this case is merely a rough indicator value. The user may adjust the determination threshold value in accordance with the status of use of motor 1.

By considering the temperature value in the above-mentioned two modes, the accuracy of setting the threshold value can be improved. For example, in the case of not a brand-new motor, the vibration value and the motor surface temperature show the following values immediately after start of driving and after driving for a certain period of time. It is to be noted that the following numerical values are shown merely by way of example but do not limit the present invention.

Immediately after start of driving: vibration value 1.75 m/s², motor surface temperature 5 °C

After a lapse of a certain period of time: vibration value 0.46 m/s², motor temperature 40 °C (saturation)

This example shows that the vibration value is dependent on the surface temperature of the motor (the motor temperature). The reason why the vibration value changes depending on the motor temperature is assumed that the viscosity of the lubricating oil in the bearing portion has been changed by the temperature. Since the viscosity of the lubricating oil is relatively high immediately after driving of the motor is started, vibrations are more likely to be transmitted to the housing of the motor. Thus, it is considered that the vibration value is high.

On the other hand, when this motor is installed in an environment where the ambient temperature is high, the above-mentioned change in vibration value may not remarkably occur. When the ambient temperature is high and the temperature of the rotating machine itself is also high, the viscosity of the lubricating oil is relatively low as compared with the viscosity at a low temperature. Thus, the vibration value tends to be low. When the threshold value for abnormality determination is set based only on the vibration value with no consideration of the influence of the temperature, the abnormal state of the rotating machine may be determined as a normal state.

According to the embodiment of the present invention, the state monitoring system for the rotating machine can simultaneously measure the temperature of the rotating machine itself and the ambient temperature of the rotating machine in addition to the vibration value. The user can appropriately set the determination threshold value in consideration of the temperature of the rotating machine itself and the ambient temperature of the rotating machine in addition to the vibration value. Thereby, the reliability of abnormality determination for the rotating machine can be improved. In the following, an example of setting the determination threshold value will be described.

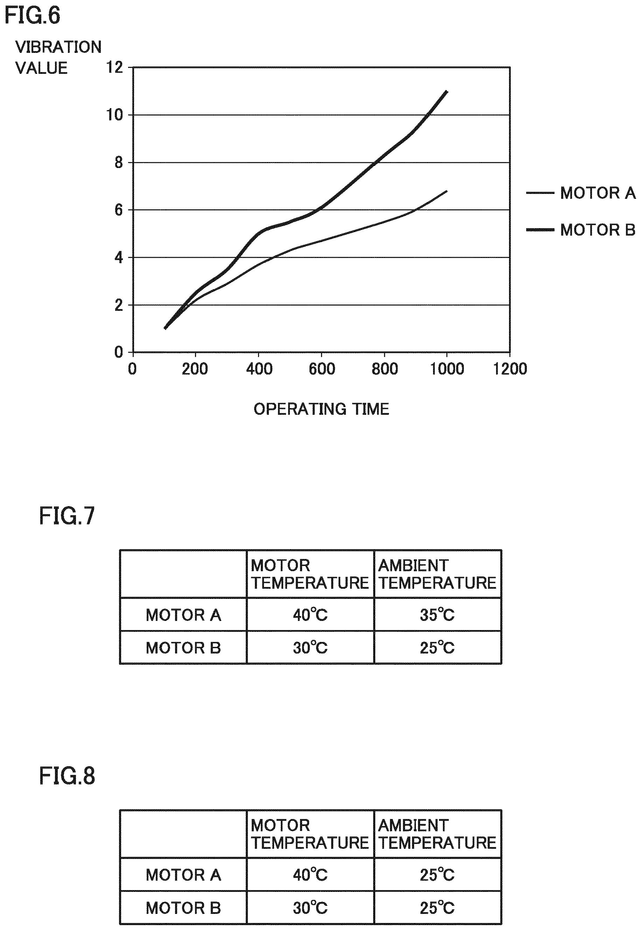

Fig. 6 is a graph showing a change in vibration value with respect to the operating times of two motors. Fig. 7 is a diagram showing the first example of the surface temperature (motor temperature) and the ambient temperature of each of two motors in tabular form. Referring to Figs. 6 and 7, it is assumed that two motors A and B of the same type are introduced into two apparatuses having the same configuration at the same timing.

In the first example, motor A is higher in motor temperature than motor B. However, the difference between the motor temperature and the ambient temperature is 5 °C in each of these two motors. In this case, it can be determined that the same load is applied to motors A and B, and the motor temperature is influenced by the ambient temperature. The user can determine that the determination threshold value for motor A needs to be lowered below the determination threshold value for motor B. Thereby, the determination threshold value for motor A can be appropriately adjusted.

Fig. 8 is a diagram showing the second example of the surface temperature (motor temperature) and the ambient temperature of each of two motors in tabular form. In the second example, motor A is higher in surface temperature than motor B. The ambient temperature is the same in two motors A and B. In this case, it is estimated that motor A is higher in load than motor B.

As described in the above example, the vibration value is influenced by the temperature. Thus, it is considered that the number of vibrations of motor A tends to decrease as the motor temperature rises. In this case, the user can determine that the determination threshold value for motor A needs to be lowered below the determination threshold value for motor B. Thereby, the determination threshold value for motor A can be appropriately adjusted.

Furthermore, according to the embodiment of the present invention, the data acquisition timing can be changed in consideration of the influence of the temperature.

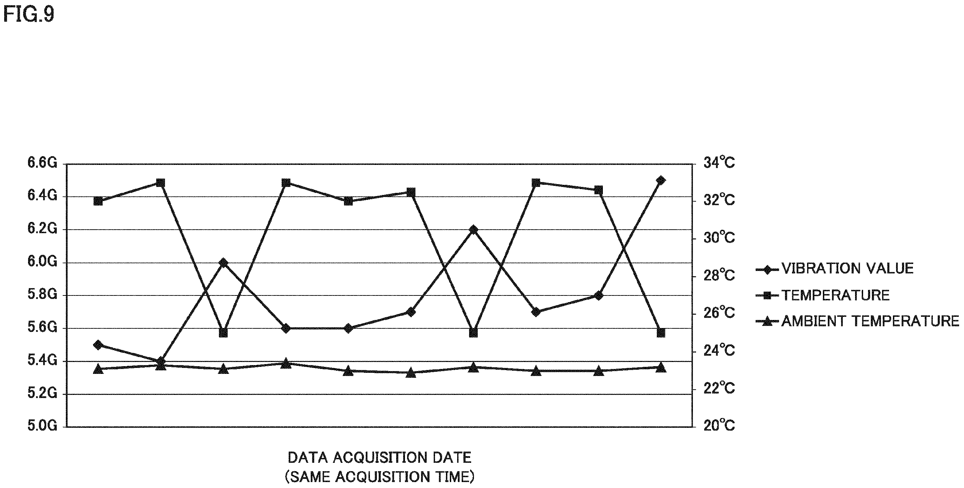

Fig. 9 is a diagram showing an example of tendencies of the vibration value, the motor temperature and the ambient temperature. The data shown in Fig. 9 is acquired at a fixed point of time in one day. As shown in Fig. 9, when the motor temperature is low, the vibration value is high, but there is almost no change in ambient temperature. It is considered that this shows the state where, at the data acquisition time, the load upon the motor is low or activation of the motor has been started.

As described above, the operating state of the motor at the data acquisition time may change day by day in accordance with the operating state of the apparatus, and the like. Thus, the user can notice the need to change the data acquisition timing in accordance with the operating state of the motor. For example, by acquiring data at a timing at which the motor surface temperature is relatively low, the abnormality in the motor can be detected at an early stage.

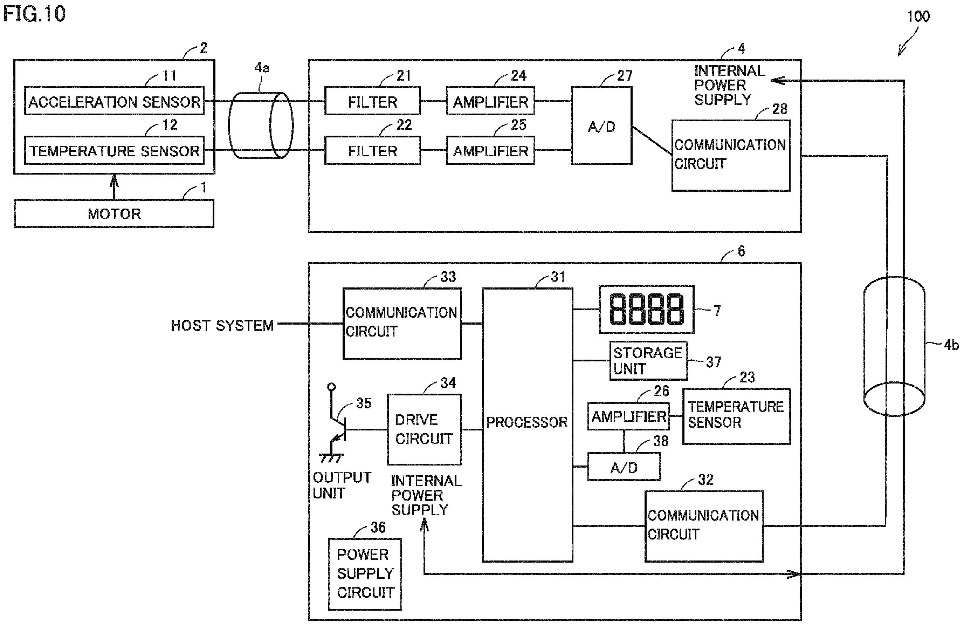

In the configuration shown in Fig. 3, temperature sensor 23 for measuring the ambient temperature of motor 1 is provided in preamplifier 4. However, the embodiment of the present invention is not limited in this way. Fig. 10 is a block diagram of a state monitoring system 100 according to an embodiment of the present invention.

As shown in Fig. 10, temperature sensor 23 may be provided in main unit 6.

In the configuration shown in Fig. 10, amplifier 26 for amplifying the output from temperature sensor 23 and an A/D converter 38 for converting the output signal from amplifier 26 into a digital signal are provided in main unit 6. Processor 31 receives the digital signal from A/D converter 38.

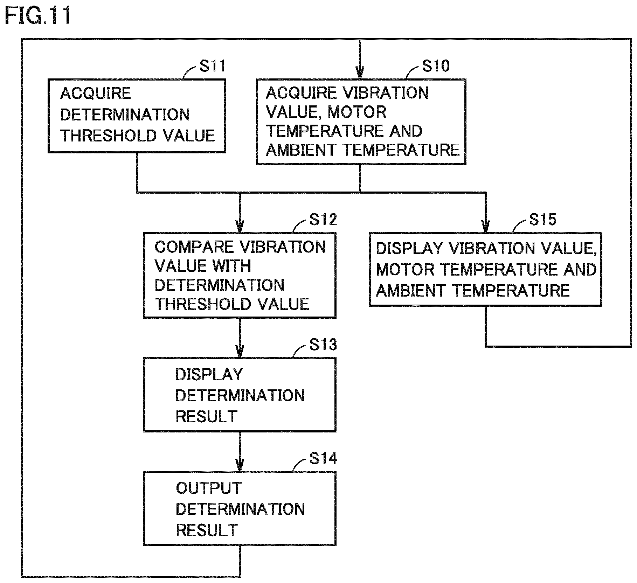

Fig. 11 is a flowchart for illustrating the monitoring process and the abnormality determination process that are performed by state monitoring system 100. Processor 31 in main unit 6 invokes the program stored in storage unit 37 and executes the invoked program. Thereby, the process shown in Fig. 11 is performed.

Referring to Figs. 3 and 11, in step S10, processor 31 acquires the vibration value of motor 1, the value of the motor temperature of motor 1 and the value of the ambient temperature of motor 1 respectively detected by acceleration sensor 11, temperature sensor 12 and temperature sensor 23. In step S11, processor 31 acquires a determination threshold value from a host system. The timing at which the process in step S11 is performed is not particularly limited. For example, the user's input of the determination threshold value into the host system may trigger transmission of the determination threshold value from the host system to main unit 6.

In step S12, processor 31 compares the vibration value with the determination threshold value to determine the state of motor 1. In step S13, processor 31 causes display unit 7 to display the determination result. Display unit 7 displays the state of motor 1. The display manner is not particularly limited. Furthermore, in step S14, processor 31 outputs the determination result to the outside of main unit 6. For example, processor 31 causes output unit 35 to output the signal representing the determination result to the outside of main unit 6. Processor 31 may transmit the determination result of processor 31 through communication circuit 33 to the host system. Then, the process is returned from step S14 to step S10. Also, only one of steps S13 and S14 may be performed.

Furthermore, in step S15, processor 31 causes display unit 7 to display the vibration value, the value of the surface temperature of motor 1 and the ambient temperature of motor 1, which are acquired in step S11. The display process in step S13 and the display process in step S15 may be simultaneously performed. Alternatively, by user's setting, the display process in step S13 and the display process in step S15 may be switched. After step S15, the process is returned to step S10.

As described above, according to the embodiment of the present invention, the reliability of abnormality determination for the motor can be improved by simultaneously measuring the surface temperature of the motor (rotating machine) itself and the ambient temperature of the motor in addition to the vibration value of the motor.

It should be understood that the embodiments disclosed herein are illustrative and non-restrictive in every respect. The scope of the present invention is defined by the terms of the claims, rather than the description above, and is intended to include any modifications within the meaning and scope of the terms of the claims.

### REFERENCE SIGNS LIST

1 motor, 2 sensor head, 3 connector, 4 preamplifier, 4a, 4b cable, 5 thread portion, 6 main unit, 7 display unit, 10 host system, 11 acceleration sensor, 12, 23 temperature sensor, 21, 22 filter, 24, 25, 26 amplifier, 27, 38 A/D converter, 28, 32, 33 communication circuit, 31 processor, 34 drive circuit, 35 output unit, 36 power supply circuit, 37 storage unit, 100 state monitoring system, S10, S11, S12, S13, S14, S15 step.

## Claims

1. A state monitoring system (100) for a rotating machine (1), the state monitoring system (100) comprising:
a sensor head (2) that is attachable to a rotating machine (1), the sensor head (2) including
an acceleration sensor (11) configured to measure vibrations of the rotating machine (1) and output a vibration value, and
a first temperature sensor (12) configured to measure a surface temperature of the rotating machine (1) and output a rotating machine surface temperature value;
a preamplifier (4) configured to relay the vibration value from the acceleration sensor (11) and the rotating machine surface temperature value from the first temperature sensor (12);
a main unit (6); and
a second temperature sensor (23) provided in the preamplifier (4) or the main (6) unit, the second temperature sensor (23) being configured to measure an ambient temperature of the rotating machine (1) and output an ambient temperature value,
the main unit (6) including
a processor (31) configured to compare a current vibration value with a determination threshold value, and determine a state of the rotating machine (1) based on a result of said comparison, and
an output unit (35) configured to output a result of the determination of the state of the rotating machine (1) by the processor, and
**characterized by**:
the main unit(6) further including:
a display unit (7) configured to display the vibration value, the rotating machine surface temperature value and the ambient temperature value, and
a communication unit configured to receive the determination threshold value from a host system, and transmit the current vibration value and the determination result to the host system,
wherein
in case where a first rotating machine is higher in rotating machine surface temperature than a second rotating machine, and a difference between the rotating machine surface temperature and the ambient temperature is the same in the first rotating machine and the second rotating machine, the determination threshold value for the first rotating machine is adjusted to be lowered below the determination threshold value for the second rotating machine, or
in case where the first rotating machine is higher in rotating machine surface temperature than the second rotating machine, and the ambient temperature is the same in the first rotating machine and the second rotating machine, the determination threshold value for the first rotating machine is adjusted to be lowered below the determination threshold value for the second rotating machine.

2. The state monitoring system for a rotating machine according to claim 1, wherein
the second temperature sensor (23) is incorporated in the preamplifier (4), and
the preamplifier (4) is configured to
amplify an analog signal output from each of the acceleration sensor (11), the first temperature sensor (12) and the second temperature sensor (23), and
convert the amplified analog signal into a digital signal.

3. The state monitoring system for a rotating machine according to claim 1, wherein
the second temperature sensor (23) is incorporated in the main unit (5),
the preamplifier (4) is configured to
amplify an analog signal output from each of the acceleration sensor (11) and the first temperature sensor (12), and
convert the amplified analog signal into a digital signal, and the main unit (5) is configured to
amplify an analog signal output from the second temperature sensor (23), and
convert the amplified analog signal into a digital signal.

4. The state monitoring system for a rotating machine according to any one of claims 1 to 3, further comprising:
a cable (4a) through which an analog signal output from the sensor head (2) is transmitted to the preamplifier (4); and
a connector (3) through which the sensor head (2) is connectable to the cable (4a) and through which the sensor head (2) is removable from the cable (4a).

5. A method of monitoring a state of a rotating machine (1), the method comprising:
acquiring (S10), by a processor (31), a vibration value and a rotating machine surface temperature value from a sensor head (2) that is attachable to a rotating machine (1), the sensor head (2) including
an acceleration sensor (11) configured to measure vibrations of the rotating machine (1), and
a first temperature sensor (12) configured to measure a surface temperature of the rotating machine (1);
acquiring (S10), by the processor (31), an ambient temperature value from a second temperature sensor (23) configured to measure an ambient temperature of the rotating machine (1);
comparing (S12), by the processor (31), a current vibration value with a determination threshold value and determining a state of the rotating machine (1) based on a result of said comparison;
outputting (S14), by an output unit (35), a result of the determination of the state of the rotating machine (1) by the processor; and
**characterized by**:
displaying (S15), by a display unit (7), the vibration value, the rotating machine surface temperature value and the ambient temperature value; and
receiving (S11), by a communication unit (33), the determination threshold value from a host system,
wherein
in case where a first rotating machine is higher in rotating machine surface temperature than a second rotating machine, and a difference between the rotating machine surface temperature and the ambient temperature is the same in the first rotating machine and the second rotating machine, the determination threshold value for the first rotating machine is adjusted to be lowered below the determination threshold value for the second rotating machine, or
in case where the first rotating machine is higher in rotating machine surface temperature than the second rotating machine, and the ambient temperature is the same in the first rotating machine and the second rotating machine, the determination threshold value for the first rotating machine is adjusted to be lowered below the determination threshold value for the second rotating machine.

6. A computer program comprising instructions which, when the program is executed by a computer, cause the computer to carry out the method of claim 5.

7. A non-transitory computer-readable recording medium in which the program according to claim 6 is recorded.

## Patentansprüche

1. Zustandsüberwachungssystem (100) für eine rotierende Maschine (1), wobei das Zustandsüberwachungssystem (100) Folgendes aufweist:
einen Sensorkopf (2), der an einer rotierenden Maschine (1) anbringbar ist, wobei der Sensorkopf (2) Folgendes aufweist:
einen Beschleunigungssensor (11), der eingerichtet ist, Vibrationen der rotierenden Maschine (1) zu messen und einen Vibrationswert auszugeben, und
einen ersten Temperatursensor (12), der eingerichtet ist, eine Oberflächentemperatur der rotierenden Maschine (1) zu messen und einen Oberflächentemperaturwert der rotierenden Maschine auszugeben;
einen Vorverstärker (4), der eingerichtet ist, den Vibrationswert von dem Beschleunigungssensor (11) und den Oberflächentemperaturwert der rotierenden Maschine von dem ersten Temperatursensor (12) weiterzuleiten;
eine Haupteinheit (6); und
einen zweiten Temperatursensor (23), der in dem Vorverstärker (4) oder der Haupteinheit (6) vorgesehen ist, wobei der zweite Temperatursensor (23) eingerichtet ist, eine Umgebungstemperatur der rotierenden Maschine (1) zu messen und einen Umgebungstemperaturwert auszugeben,
wobei die Haupteinheit (6) Folgendes aufweist:
einen Prozessor (31), der eingerichtet ist, einen aktuellen Vibrationswert mit einem Bestimmungsschwellenwert zu vergleichen und einen Zustand der rotierenden Maschine (1) basierend auf einem Ergebnis des Vergleichs zu bestimmen, und
eine Ausgabeeinheit (35), die eingerichtet ist, ein Ergebnis der Bestimmung des Zustands der rotierenden Maschine (1) durch den Prozessor auszugeben, und
**dadurch gekennzeichnet, dass**:
die Haupteinheit (6) ferner Folgendes aufweist:
eine Anzeigeeinheit (7), die eingerichtet ist, den Vibrationswert, den Oberflächentemperaturwert der rotierenden Maschine und den Umgebungstemperaturwert anzuzeigen, und
eine Kommunikationseinheit, die eingerichtet ist, den Bestimmungsschwellenwert von einem Hostsystem zu empfangen und den aktuellen Vibrationswert und das Bestimmungsergebnis an das Hostsystem zu übertragen,
wobei
falls eine erste rotierende Maschine eine Oberflächentemperatur der rotierenden Maschine höher als eine zweite rotierende Maschine aufweist und eine Differenz zwischen der Oberflächentemperatur der rotierenden Maschine und der Umgebungstemperatur in der ersten rotierenden Maschine und der zweiten rotierenden Maschine gleich ist, der Bestimmungsschwellenwert für die erste rotierende Maschine eingestellt wird, um unter den Bestimmungsschwellenwert für die zweite rotierende Maschine gesenkt zu werden, oder
falls die erste rotierende Maschine eine Oberflächentemperatur der rotierenden Maschine höher als die zweite rotierende Maschine aufweist und die Umgebungstemperatur in der ersten rotierenden Maschine und der zweiten rotierenden Maschine gleich ist, der Bestimmungsschwellenwert für die erste rotierende Maschine eingestellt wird, um unter den Bestimmungsschwellenwert für die zweite rotierende Maschine gesenkt zu werden.

2. Zustandsüberwachungssystem für eine rotierende Maschine nach Anspruch 1, wobei
der zweite Temperatursensor (23) in den Vorverstärker (4) integriert ist, und
der Vorverstärker (4) eingerichtet ist,
ein analoges Signal zu verstärken, das von jedem von dem Beschleunigungssensor (11), dem ersten Temperatursensor (12) und dem zweiten Temperatursensor (23) ausgegeben wird, und
das verstärkte analoge Signal in ein digitales Signal umzuwandeln.

3. Zustandsüberwachungssystem für eine rotierende Maschine nach Anspruch 1, wobei
der zweite Temperatursensor (23) in die Haupteinheit (5) integriert ist,
der Vorverstärker (4) eingerichtet ist,
ein analoges Signal zu verstärken, das von jedem von dem Beschleunigungssensor (11) und dem ersten Temperatursensor (12) ausgegeben wird, und
das verstärkte analoge Signal in ein digitales Signal umzuwandeln, und die Haupteinheit (5) eingerichtet ist,
ein analoges Signal zu verstärken, das von dem zweiten Temperatursensor (23) ausgegeben wird, und
das verstärkte analoge Signal in ein digitales Signal umzuwandeln.

4. Zustandsüberwachungssystem für eine rotierende Maschine nach einem der Ansprüche 1 bis 3, ferner aufweisend:
ein Kabel (4a), durch das ein analoges Signal, das von dem Sensorkopf (2) ausgegeben wird, an den Vorverstärker (4) übertragen wird; und
einen Verbinder (3), durch den der Sensorkopf (2) mit dem Kabel (4a) verbindbar ist und durch den der Sensorkopf (2) von dem Kabel (4a) entfernbar ist.

5. Verfahren zum Überwachen eines Zustands einer rotierenden Maschine (1), wobei das Verfahren Folgendes aufweist:
Erfassen (S10), durch einen Prozessor (31), eines Vibrationswerts und eines Oberflächentemperaturwerts der rotierenden Maschine von einem Sensorkopf (2), der an einer rotierenden Maschine (1) anbringbar ist, wobei der Sensorkopf (2) Folgendes aufweist:
einen Beschleunigungssensor (11), der eingerichtet ist, Vibrationen der rotierenden Maschine (1) zu messen, und
einen ersten Temperatursensor (12), der eingerichtet ist, eine Oberflächentemperatur der rotierenden Maschine (1) zu messen;
Erfassen (S10), durch den Prozessor (31), eines Umgebungstemperaturwerts von einem zweiten Temperatursensor (23), der eingerichtet ist, eine Umgebungstemperatur der rotierenden Maschine (1) zu messen;
Vergleichen (S12), durch den Prozessor (31), eines aktuellen Vibrationswerts mit einem Bestimmungsschwellenwert und Bestimmen eines Zustands der rotierenden Maschine (1) basierend auf einem Ergebnis des Vergleichs;
Ausgeben (S14), durch eine Ausgabeeinheit (35), eines Ergebnisses der Bestimmung des Zustands der rotierenden Maschine (1) durch den Prozessor; und
**gekennzeichnet durch**:
Anzeigen (S15), durch eine Anzeigeeinheit (7), des Vibrationswerts, des Oberflächentemperaturwerts der rotierenden Maschine und des Umgebungstemperaturwerts; und
Empfangen (S11), durch eine Kommunikationseinheit (33), des Bestimmungsschwellenwerts von einem Hostsystem,
wobei
falls eine erste rotierende Maschine eine Oberflächentemperatur der rotierenden Maschine höher als eine zweite rotierende Maschine aufweist und eine Differenz zwischen der Oberflächentemperatur der rotierenden Maschine und der Umgebungstemperatur in der ersten rotierenden Maschine und der zweiten rotierenden Maschine gleich ist, der Bestimmungsschwellenwert für die erste rotierende Maschine eingestellt wird, um unter den Bestimmungsschwellenwert für die zweite rotierende Maschine gesenkt zu werden, oder
falls die erste rotierende Maschine eine Oberflächentemperatur der rotierenden Maschine höher als die zweite rotierende Maschine aufweist und die Umgebungstemperatur in der ersten rotierenden Maschine und der zweiten rotierenden Maschine gleich ist, der Bestimmungsschwellenwert für die erste rotierende Maschine eingestellt wird, um unter den Bestimmungsschwellenwert für die zweite rotierende Maschine gesenkt zu werden.

6. Computerprogramm, das Anweisungen aufweist, die, wenn das Programm durch einen Computer ausgeführt wird, den Computer veranlassen, das Verfahren nach Anspruch 5 auszuführen.

7. Nichtflüchtiges computerlesbares Aufzeichnungsmedium, auf dem das Programm nach Anspruch 6 aufgezeichnet ist.

## Revendications

1. Système de surveillance d'état (100) pour une machine rotative (1), le système de surveillance d'état (100) comprenant :
une tête de capteur (2) qui peut être fixée à une machine rotative (1), la tête de capteur (2) comprenant
un capteur d'accélération (11) configuré pour mesurer des vibrations de la machine rotative (1) et délivrer en sortie une valeur de vibration, et
un premier capteur de température (12) configuré pour mesurer une température de surface de la machine rotative (1) et délivrer en sortie une valeur de température de surface de machine rotative ;
un préamplificateur (4) configuré pour relayer la valeur de vibration provenant du capteur d'accélération (11) et la valeur de température de surface de machine rotative provenant du premier capteur de température (12) ;
une unité principale (6) ; et
un second capteur de température (23) prévu dans le préamplificateur (4) ou l'unité principale (6), le second capteur de température (23) étant configuré pour mesurer une température ambiante de la machine rotative (1) et délivrer en sortie une valeur de température ambiante,
l'unité principale (6) comprenant
un processeur (31) configuré pour comparer une valeur de vibration actuelle avec une valeur de seuil de détermination, et déterminer un état de la machine rotative (1) sur la base d'un résultat de ladite comparaison, et
une unité de sortie (35) configurée pour délivrer en sortie un résultat de la détermination de l'état de la machine rotative (1) par le processeur, et
**caractérisé par** :
l'unité principale (6) comprenant en outre :
une unité d'affichage (7) configurée pour afficher la valeur de vibration, la valeur de température de surface de machine rotative et la valeur de température ambiante, et
une unité de communication configurée pour recevoir la valeur de seuil de détermination à partir d'un système hôte, et transmettre la valeur de vibration actuelle et le résultat de détermination au système hôte,
dans lequel
dans le cas où une première machine rotative est plus élevée en température de surface de machine rotative qu'une seconde machine rotative, et une différence entre la température de surface de machine rotative et la température ambiante est la même dans la première machine rotative et la seconde machine rotative, la valeur de seuil de détermination pour la première machine rotative est ajustée pour être abaissée en dessous de la valeur de seuil de détermination pour la seconde machine rotative, ou
dans le cas où la première machine rotative est plus élevée en température de surface de machine rotative que la seconde machine rotative, et la température ambiante est la même dans la première machine rotative et la seconde machine rotative, la valeur de seuil de détermination pour la première machine rotative est ajustée pour être abaissée en dessous de la valeur de seuil de détermination pour la seconde machine rotative.

2. Système de surveillance d'état pour une machine rotative selon la revendication 1, dans lequel
le second capteur de température (23) est incorporé dans le préamplificateur (4), et
le préamplificateur (4) est configuré pour
amplifier un signal analogique délivré en sortie par chacun du capteur d'accélération (11), du premier capteur de température (12) et du second capteur de température (23), et
convertir le signal analogique amplifié en un signal numérique.

3. Système de surveillance d'état pour une machine rotative selon la revendication 1, dans lequel
le second capteur de température (23) est incorporé dans l'unité principale (5),
le préamplificateur (4) est configuré pour
amplifier un signal analogique délivré en sortie par chacun du capteur d'accélération (11) et du premier capteur de température (12), et
convertir le signal analogique amplifié en un signal numérique, et l'unité principale (5) est configurée pour
amplifier un signal analogique délivré en sortie par le second capteur de température (23), et
convertir le signal analogique amplifié en un signal numérique.

4. Système de surveillance d'état pour une machine rotative selon l'une quelconque des revendications 1 à 3, comprenant en outre :
un câble (4a) à travers lequel un signal analogique délivré en sortie par la tête de capteur (2) est transmis au préamplificateur (4) ; et
un connecteur (3) à travers lequel la tête de capteur (2) peut être connectée au câble (4a) et à travers lequel la tête de capteur (2) peut être retirée du câble (4a).

5. Procédé de surveillance d'un état d'une machine rotative (1), le procédé comprenant :
l'acquisition (S10), par un processeur (31), d'une valeur de vibration et d'une valeur de température de surface de machine rotative à partir d'une tête de capteur (2) qui peut être fixée à une machine rotative (1), la tête de capteur (2) comprenant
un capteur d'accélération (11) configuré pour mesurer des vibrations de la machine rotative (1), et
un premier capteur de température (12) configuré pour mesurer une température de surface de la machine rotative (1) ;
l'acquisition (S10), par le processeur (31), d'une valeur de température ambiante à partir d'un second capteur de température (23) configuré pour mesurer une température ambiante de la machine rotative (1) ;
la comparaison (S 12), par le processeur (31), d'une valeur de vibration actuelle avec une valeur de seuil de détermination et la détermination d'un état de la machine rotative (1) sur la base d'un résultat de ladite comparaison ;
la délivrance en sortie (S14), par une unité de sortie (35), d'un résultat de la détermination de l'état de la machine rotative (1) par le processeur ; et
**caractérisé par** :
l'affichage (S 15), par une unité d'affichage (7), de la valeur de vibration, de la valeur de température de surface de machine rotative et de la valeur de température ambiante ; et
la réception (S11), par une unité de communication (33), de la valeur de seuil de détermination à partir d'un système hôte,
dans lequel
dans le cas où une première machine rotative est plus élevée en température de surface de machine rotative qu'une seconde machine rotative, et une différence entre la température de surface de machine rotative et la température ambiante est la même dans la première machine rotative et la seconde machine rotative, la valeur de seuil de détermination pour la première machine rotative est ajustée pour être abaissée en dessous de la valeur de seuil de détermination pour la seconde machine rotative, ou
dans le cas où la première machine rotative est plus élevée en température de surface de machine rotative que la seconde machine rotative, et la température ambiante est la même dans la première machine rotative et la seconde machine rotative, la valeur de seuil de détermination pour la première machine rotative est ajustée pour être abaissée en dessous de la valeur de seuil de détermination pour la seconde machine rotative.

6. Programme informatique comprenant des instructions qui, lorsque le programme est exécuté par un ordinateur, amènent l'ordinateur à réaliser le procédé selon la revendication 5.

7. Support d'enregistrement non transitoire lisible par ordinateur dans lequel le programme selon la revendication 6 est enregistré.
